# EUROPEAN PATENT SPECIFICATION

(11) **EP 2 061 117 B1**
(45) Date of publication and mention of the grant of the patent: **22.02.2012**
(21) Application number: 08168787.3
(22) Date of filing: 10.11.2008
(51) Int. Cl.: H01M 10/42, H01M 10/46, H01M 16/00

(54) **Power supply apparatus using fuel cell**
Stromversorgungsvorrichtung, die eine Brennstoffzelle einsetzt
Appareil d'alimentation électrique utilisant une pile à combustible

(30) Priority: 15.11.2007 JP 2007296246
(43) Date of publication of application: 20.05.2009
(73) Proprietor: Nikon Corporation, Tokyo 100-8331 (JP)
(72) Inventor: Ohmori, Seishi c/o Nikon Corporation Intellectual Property, Chiyoda-ku, Tokyo 100-8331 (JP)
(74) Representative: Cabinet Plasseraud

(56) References cited:
- EP-A- 1 453 134
- US-A- 5 850 134
- US-A1- 2006 108 970
- US-A1- 2007 122 661

## Description

### BACKGROUND OF THE INVENTION

### 1. Field of the Invention

The invention relates to a power supply apparatus using a fuel cell for use in portable devices.

### 2. Description of the Related art

When a portable device such as a camera is used in a place where there is no electric power, such as outdoors, it has been necessary to carry multiple portable power sources that use large heavy rechargeable batteries. Lithium-ion batteries as an example of these portable power sources are generally large and heavy and also require a long charging time.

On the other hand, fuel cells have higher energy density than the lithium-ion batteries and therefore can supply electric power for a longer period of time. These fuel cells are small and light and require less time to complete charging. As an example of a power supply apparatus using a fuel cell for use in portable devices, a charger has been proposed by, for example, Japanese Unexamined Patent Application Publication No. 2006-166606. This charger accommodates a detachable fuel cartridge. A fuel generating section generates electricity upon receiving the supply of fuel from the fuel cartridge. The generated electric power is supplied through an adaptor mounted on the charger to a portable telephone or the like accommodated in the adaptor. The above power supply apparatus using the fuel cell for use in portable devices can be repetitively used any number of times. Document EP 1 453 134 discloses a power supply apparatus using a fuel cell, wherein the secondary battery is charged by the fuel cell through a charging circuit. The fuel cell further includes a detachable cartridge fuel tank.

### SUMMARY OF THE INVENTION

However, in the power supply apparatus using the fuel cell for use in portable devices as disclosed in the above publication, it is difficult to rapidly supply a large amount of electric power to a portable device, in cases such as when an image is taken by a camera using a flash. Therefore, in order to supply power from the power supply apparatus using a fuel cell to a portable device subjected to fluctuations in the necessary amount of electric power, the power supply apparatus needs to accommodate therein a large-capacity charger. This increases the size of the power supply apparatus as in cases of the related art with a portable power source using a large heavy rechargeable cell.

It is also generally difficult to use the large-sized power supply apparatus mounted on a portable device such as a camera or a portable telephone outdoors. The same is true for the charger disclosed in the above publication.

It is an object of the invention to provide a small power supply apparatus using a fuel cell which is capable of coping with considerable fluctuations in the amount of electric power needed in portable devices.

In order to achieve the object mentioned above, according to a first aspect of the present invention, there is provided a power supply apparatus using a fuel cell including: an adaptor provided with an identification mechanism to identify the type of a secondary cell accommodated therein, the adaptor detachably accommodating a secondary cell and having a certain external shape irrespective of the type of a secondary cell accommodated; and a charger main body provided with a fuel cell to generate electric power by using fuel supplied from a fuel containing tank, a charging circuit to perform charging by supplying electric power generated by the fuel cell to a secondary cell accommodated in the adaptor, at a charging voltage and a charging current suitable for the type of a secondary cell identified by the identification mechanism, a monitoring circuit to monitor use situation of a portable device, and an output switching circuit that performs switching, depending on the result of monitoring performed by the monitoring circuit, between electric power generated by a fuel cell and electric power outputted by a secondary cell accommodated in the adaptor, and outputs either one of them to the portable device. The charger main body detachably accommodates the adaptor and the fuel containing tank.

In one embodiment of the power supply apparatus, the adaptor may accommodate a plurality of secondary batteries, and the charging circuit may charge the plurality of secondary batteries.

In another embodiment of the power supply apparatus, the adaptor may have a connector that is used to output electric power switched by the output switching circuit, and has a specific shape according to the type of a secondary cell accommodated.

In a further embodiment of the power supply apparatus, the charger main body may be provided with an engaging member detachably engaged to a belt or a camera strap.

According to a second aspect of the present invention, there is provided a power supply apparatus including: a charger main body provided with a fuel cell to generate electric power by using fuel supplied from a fuel containing tank, a charging circuit to perform charging by supplying electric power generated by a fuel cell to a secondary cell accommodated, at a charging voltage and a charging current suitable for the type of a secondary cell accommodated, a monitoring circuit to monitor use situation of a portable device, and an output switching circuit that performs switching, depending on the result of monitoring performed by the monitoring circuit, between electric power generated by a fuel cell and electric power outputted by a secondary cell, and outputs either one of them to a portable device. The charger main body detachably accommodates the secondary cell and the fuel containing tank, and is used integrated with the portable device.

In one embodiment of the power supply apparatus, the charging circuit may perform charging by supplying electric power generated by a fuel cell to a cell built into a portable device, at a charging voltage and a charging current suitable for the cell built into the portable device.

In another embodiment of the power supply apparatus, the secondary cell may be of the same type as a cell built into a portable device.

In a further embodiment of the power supply apparatus, the charging circuit may perform charging by supplying the secondary cell with electric power supplied from an AC power source, instead of the electric power generated by the fuel cell, and the output switching circuit may perform switching, depending on the result of monitoring performed by the monitoring circuit, between electric power supplied from the AC power source and electric power outputted by the secondary cell, and may output either one of them to a portable device.

Thus, without using a large-capacity charger, the combined use of the fuel cell and the secondary cell realizes a small power supply apparatus using a fuel cell which is capable of coping with considerable fluctuations in the amount of electric power needed in a portable device.

### BRIEF DESCRIPTION OF THE DRAWINGS

Fig. 1 is a perspective view showing schematically a configuration of a power supply apparatus using a fuel cell according to a first embodiment of the invention;
Fig. 2 is a perspective view when an adaptor shown in Fig. 1 is viewed from the bottom thereof;
Fig. 3 is a block diagram showing a circuit configuration of the power supply apparatus shown in Fig. 1;
Fig. 4 is a perspective view showing schematically a configuration of a power supply apparatus using a fuel cell according to a second embodiment of the invention; and
Fig. 5 is a perspective view showing schematically a configuration of a power supply apparatus using a fuel cell according to a modified example of the second embodiment.

### DETAILED DESCRIPTION OF THE PREFERRED EMBODIMENT

A power supply apparatus using a fuel cell according to the best embodiment of the invention will be described below.

### (First Embodiment)

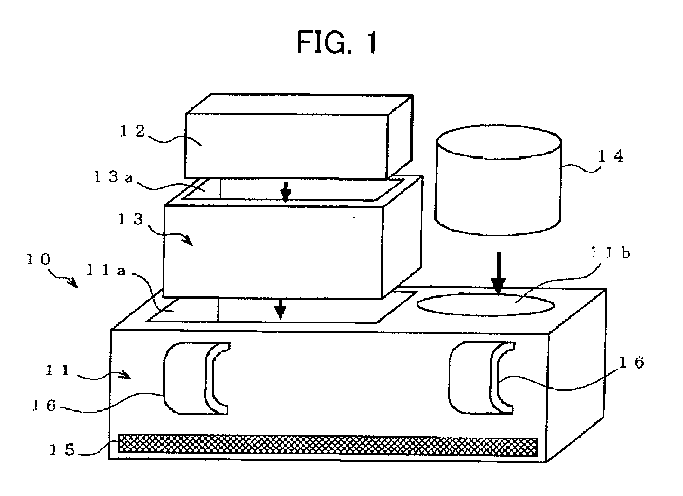

Fig. 1 is a perspective view showing schematically the configuration of a power supply apparatus 10 using a fuel cell according to a first embodiment of the invention.

The power supply apparatus 10 is constructed from a charger main body 11 having a rectangular parallelepiped shape, and an adaptor 13 which has a smaller rectangular parallelepiped shape than the charger main body 11 and can detachably accommodate a secondary cell 12 in an accommodating part 13a.

The charger main body 11 is provided with an accommodating part 11a opening into a rectangular parallelepiped shape, and an accommodating part 11b opening cylindrically. The rectangular parallelepiped adaptor 13 and a cylindrical fuel cartridge 14 constituting a fuel containing tank are detachably accommodated in these accommodating parts 11a and 11b, respectively. An air inlet port 15 for admitting external air into the inside of the charger main body 11 is formed in a mesh shape at a lower part of the side face of the charger main body 11. A similar air inlet port (not shown) is formed on the bottom (not shown) of the charger main body 11. The charger main body 11 is configured to enable ventilation of the inside thereof through these air inlet ports 15.

The side face of the charger main body 11 above the air inlet port 15 is provided with a pair of engaging members 16 and 16 to be detachably engaged to the belt of the user of the power supply apparatus 10, or a camera strap. These engaging members 16 and 16 have a substantially U-shape in cross section, and provide space through which the belt or the camera strap is passed.

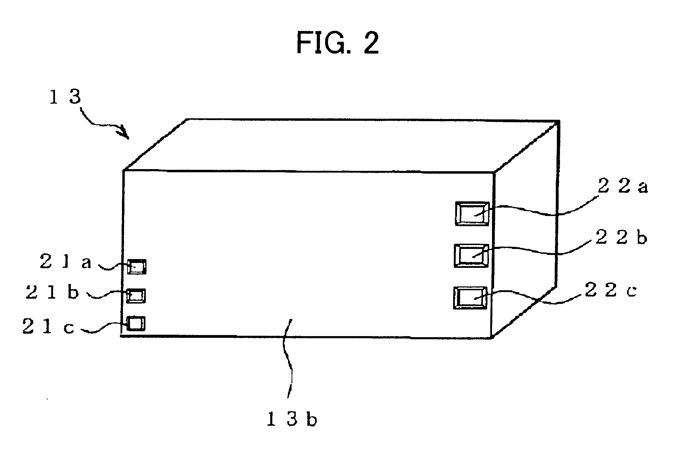

Fig. 2 is a perspective view when the adaptor 13 is viewed from its bottom 13b.

A plurality of adaptors 13 are prepared for each type of secondary cell 12 accommodated in the accommodating part 13a, and the external shapes of these adaptors 13 are held constant irrespective of the type of the secondary cell 12. The bottom 13b of the adaptor 13 is provided with terminals 21a, 21b and 21c for identification codes, and electrodes 22a, 22b and 22c for power supply and information exchange. These terminals 21a to 21c and these electrodes 22a to 22c are formed at certain positions on the bottom 13b, irrespective of the type of the adaptor 13.

The identification code terminals 21a to 21c are configured to establish connections in different forms according to the type of the adaptor 13, with the negative electrode of the secondary cell 12 to be accommodated in the accommodating part 13a. For three identification code terminals 21a to 21c as in the present embodiment, there are eight forms of connecting these terminals 21a to 21c to the negative electrodes. This enables identification of eight types of secondary batteries 12. When the adaptor 13 is accommodated in the accommodating part 11a, the charger main body 11 reads the potentials of these terminals 21a to 21c and identifies the type of the secondary cell 12 accommodated in the adaptor 13. The identification code terminals 21a to 21c included in the adaptor 13 constitute an identification mechanism to identify the type of the secondary cell 12 to be accommodated in the accommodating part 13a.

Among the electrodes 22a to 22c for power supply and information exchange, the electrodes 22a and 22c are used for power supply. That is, the electrode 22a is connected to the positive electrode of the secondary cell 12 accommodated in the adaptor 13 through the inner electrode of the accommodating part 13a, and the electrode 22c is connected to the negative electrode of the secondary cell 12 accommodated in the adaptor 13 through the inner electrode of the accommodating part 13a. The charger main body 11 is connected to the electrodes 22a and 22c through the electrodes formed inside the accommodating part 11a, and performs electric power exchange with the secondary cell 12 accommodated in the adaptor 13 as will be described later. Among the electrodes 22a to 22c, the electrode 22b is used for information exchange. The adaptor 13 is provided with an information transmission circuit (not shown), and the information transmission circuit transmits information, such as the type of the secondary cell 12 accommodated in the accommodating part 13a, the remaining capacity thereof and the charging progress thereof, through the electrode 22b to the portable device.

The adaptor 13 has on a side face thereof a connector (not shown) through which the electric power outputted from the charger main body 11 is outputted to the exterior. This connector has a specific shape according to the type of the secondary cell 12 accommodated in the accommodating part 13a of the adaptor 13. When the adaptor 13 is accommodated in the accommodating part 11a of the charger main body 11, the connector is exposed from an opening (not shown) formed on the side face of the charger main body 11. Upon establishing a connection between the connector exposed from the opening and a power supply cable to the portable device such as an AC adaptor input cable of a camera, the electric power outputted from the charger main body 11 is supplied to the portable device such as a camera.

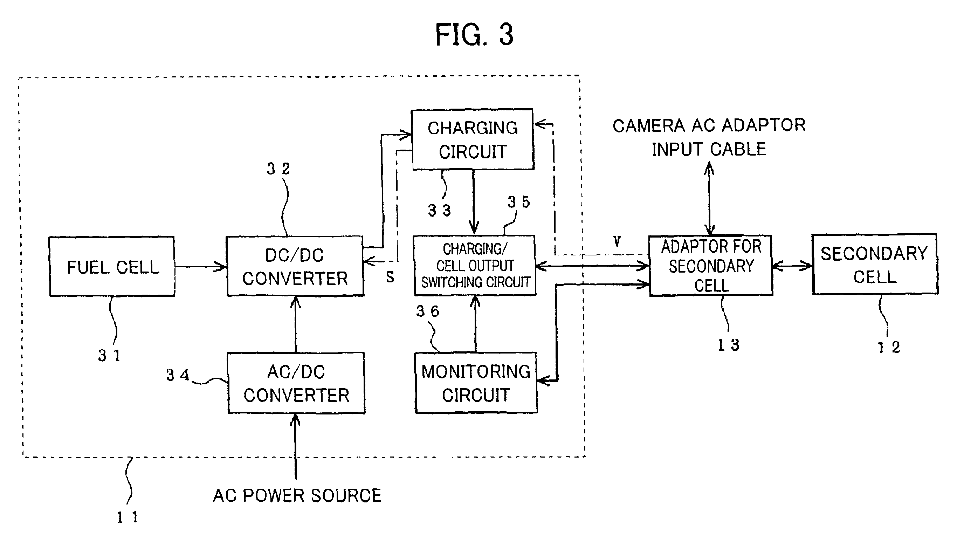

Fig. 3 is a block diagram showing a circuit configuration of the power supply apparatus 10. In Fig. 3, like parts are identified by the same reference numerals as in Fig. 1, and a description thereof is omitted.

The charger main body 11 accommodates a fuel cell 31 that generates electric power by using the fuel supplied from the fuel cartridge 14. The fuel cartridge 14 contains fuel such as methanol or hydrogen necessary for the electric power generation in the fuel cell 31. The fuel cell 31 generates electric power upon receiving the supply of the fuel, and outputs a constant DC voltage. During electric power generation, the fuel cell 31 takes oxygen through the air inlet port 15, and generates water vapor as a side product. The generated water vapor is discharged through the air inlet port 15 to the exterior of the charger main body 11. In the present embodiment, the energy density per volume (litter) of the fuel cell 31 is about 400 to 600 WH/1, and that per weight (kg) is about 170 WH/kg. The fuel cell 31 is smaller and lighter than the lithium-ion cell, and the fuel cell 31 can be used immediately after replacing the fuel cartridge 14.

The output of the fuel cell 31 is connected to a DC/DC converter 32, and the DC/DC converter 32 is connected to a charging circuit 33. The charging circuit 33 inputs a potential V possessed by the terminals 21a to 21c provided on the bottom 13b of the adaptor 13, and based on the potential V, identifies the type of the secondary cell 12 accommodated in the adaptor 13 as described above. Subsequently, the charging circuit 33 transmits an identification signal S to the DC/DC converter 32, so that the DC/DC converter 32 applies DC/DC conversion to the constant DC voltage and current inputted from the fuel cell 31, thereby obtaining DC charging voltage and current suitable for the identified type of the secondary cell 12.

An AC/DC converter 34 is also connected to the DC/DC converter 32. The AC/DC converter 34 is connected to an AC power source and applies AC/DC conversion to the AC voltage and current supplied from the AC power source, thereby obtaining predetermined voltage and current. Upon detecting the connection of the AC/DC converter 34 to the AC power source, the DC/DC converter 32 stops the DC/DC conversion of the constant DC voltage and current inputted from the fuel cell 31, and applies DC/DC conversion to predetermined DC voltage and current outputted from the AC/DC converter 34 based on the inputted identification signal S, thereby obtaining DC charging voltage and current suitable for the type of the secondary cell 12.

The charging circuit 33 charges the secondary cell 12 by supplying the electric power generated by the fuel cell 31, at a charging voltage and charging current suitable for the identified type of the secondary cell 12, which are outputted from the DC/DC converter 32, to the secondary cell 12 accommodated in the adaptor 13 through the electrodes 22a and 22c. When the AC/DC converter 34 is connected to the AC power source, the charging circuit 33 charges the secondary cell 12 by supplying the secondary cell 12 with the electric power supplied from the AC power source, instead of the electric power generated by the fuel cell 31. These charging operations are executed through a charging/cell output switching circuit 35.

The output of the charging circuit 33 and the output from the secondary cell 12 through the adaptor 13 are applied to the charging/cell output switching circuit 35. Depending on the result of monitoring performed by a monitoring circuit 36, the charging/cell output switching circuit 35 performs switching between the electric power generated by the fuel cell 31 and supplied from the charging circuit 33, and the electric power outputted by the secondary cell 12 accommodated in the adaptor 13, and outputs either one of them to a portable device such as a camera. When the AC/DC converter 34 is connected to the AC power source, the charging/cell output switching circuit 35 performs switching, depending on the result of monitoring performed by a monitoring circuit 36, between the electric power supplied from the AC power source through the AC/DC converter 34, and the electric power outputted by the secondary cell 12, and outputs either one of them to the portable device such as a camera. The electric power thus switched by the charging/cell output switching circuit 35 is outputted to the camera through the abovementioned connector, which is not illustrated, provided in the adaptor 13 and the AC adaptor input cable connected to this connector. When the portable device such as the camera connected to this cable is not operated, the charging/cell output switching circuit 35 supplies the output of the charging circuit 33 to the secondary cell 12 so that the secondary cell 12 is charged by the electric power from the fuel cell 31.

The monitoring circuit 36 monitors usage state of the portable device such as the camera by receiving the signal from the portable device through the AC adaptor input cable or the like. Information such as the type of the secondary cell 12, the remaining capacity thereof and the progress of charging thereof is transmitted by an information transmission circuit provided within the adaptor 13 to the portable device such as the camera, through the electrode 22b and the AC adaptor input cable. Upon receipt of the information thus transmitted, the portable device displays the above information on a screen provided thereon.

When the power supply apparatus 10 having the above configuration is used, firstly, the secondary cell 12 is accommodated in a suitable accommodating part 13a of the adaptor 13. The adaptor 13 that accommodates the secondary cell 12 is then accommodated in the accommodating part 11a of the charger main body 11, and the fuel cartridge 14 is accommodated in the accommodating part 11b of the charger main body 11. Thereafter, the power supply apparatus 10 is ready for use by connecting the power supply cable with respect to the portable device such as the AC adaptor input cable of the camera, to the connector of the adaptor 13 exposed through the opening formed on the side face of the charger main body 11. When the power supply apparatus 10 is in use, if required, the engaging members 16 and 16 of the charger main body 11 are passed through the belt of the user of the power supply apparatus 10 or the camera strap.

When the adaptor 13 accommodated in the secondary cell 12 is accommodated in the accommodating part 11a of the charger main body 11, the electrode of the secondary cell 12, the inner electrode of the adaptor 13, and the outer electrodes 22a to 22c of the adaptor 13, and the inner electrode of the accommodating part 11a of the charger main body 11 are electrically conductive with each other, thereby establishing an electrical path for giving and receiving electric power between the charger main body 11 and the secondary cell 12, and an electrical path for giving and receiving signals between the adaptor 13 and the portable device. When the adaptor 13 is accommodated in the accommodating part 11a, the outer terminals 21a to 21c of the adaptor 13 and the inner terminal of the accommodating part 11a of the charger main body 11 are electrically conductive with each other to establish an electrical path for giving and receiving signals between the adaptor 13 and the charger main body 11.

The charging circuit 33 identifies the type of the secondary cell 12 accommodated in the adaptor 13, based on the potential V possessed by the terminals 21a to 21c provided on the bottom 13b of the adaptor 13. When the fuel cartridge 14 is accommodated in the accommodating part 11b of the charger main body 11, the charging circuit 33 starts to charge the secondary cell 12 by supplying the electric power generated by the fuel cell 31 through the abovementioned electrical path to the secondary cell 12 accommodated in the adaptor 13, at a charging voltage and a charging current suitable for the type of the identified secondary cell 12.

The electric power outputted from the charger main body 11 is supplied to the portable device such as the camera by connecting the power supply cable such as the AC adaptor input cable of the camera, to the connector of the adaptor 13. That is, depending on the result of monitoring performed by the monitoring circuit 36, one of the electric power generated by the fuel cell 31 and supplied from the charging circuit 33, and the electric power outputted by the secondary cell 12 accommodated in the adaptor 13 is switched and outputted to the portable device by the charging/cell output switching circuit 35. The output of the fuel cell 31 is held substantially constant as a characteristic thereof. On the other hand, in general, the electric power necessary for the portable device such as the camera widely varies from 0 to several watts. However, owing to the output switching by the charging/cell output switching circuit 35, when the monitoring circuit 36 monitors the use situation of the portable device and there are small fluctuations in the electric power needed in the portable device, the electric power generated by the fuel cell 31 is supplied to the portable device. On the other hand, when there are large fluctuations in the electric power needed in the portable device, the electric power outputted from the secondary cell 12 is supplied to the portable device.

In the power supply apparatus 10 according to the present embodiment, owing to the output switching by the charging/cell output switching circuit 35, the electric power supply to the portable device can be performed properly even if the portable device rapidly requires a large amount of electric power as in the case where the power supply apparatus 10 is mounted on the camera and an image is taken using a flash. Unlike the fuel cell 31, the secondary cell 12 can rapidly supply a large amount of electric power. Hence, the small power supply apparatus 10 using the fuel cell 31, which is capable of coping with considerable fluctuations in the amount of electric power needed in the portable device, can be provided by the combined use of the fuel cell 31 and the secondary cell 12, without using a large-capacity charger.

Further, the charging circuit 33 performs charging by supplying the electric power generated by the fuel cell 31 to the secondary cell 12. Hence, there is no risk of the electric power stored in the secondary cell 12 being exhausted during the use of the portable device to which the power supply apparatus 10 is connected. The portable device can be continuously used as long as the fuel remains in the fuel cartridge 14. Even if the fuel of the fuel cartridge 14 is exhausted, it can resume using the portable device by removing the fuel cartridge 14 and replenishing the fuel. This enables the user to use the portable device without risk of cell exhaustion, thereby improving usability.

The external shape of the adaptor 13 remains constant irrespective of the type of the secondary cell 12 to be accommodated. Therefore, even when using a secondary cell 12 having a different performance and a different shape, the charger main body 11 can be commonly used with respect to the individual adaptors 13 by using the adaptor 13 corresponding to the different type of the secondary cell 12. Consequently, the power supply apparatus 10 using the fuel cell 31 having high versatility irrespective of the type of the secondary cell 12 can be provided to users at low prices. After developing the charger main body 11, the manufacturer is only required to develop the adaptor 13 corresponding to the type of the secondary cell 12. This eliminates the need to develop many types of charger main bodies 11, thus reducing development costs.

The adaptor 13 is provided with the identification code terminals 21a to 21c for identifying the type of secondary cell 12 to be accommodated, and the charging circuit 33 supplies the secondary cell 12 with the electric power generated by the fuel cell 31, at a charging voltage and a charging current suitable for the type of the identified secondary cell 12. This enables the secondary cell 12 to be used safely without any fear of the supply of unsuitable charging voltage and charging current to the secondary cell 12.

In the present embodiment, the connector possessed by the adaptor 13 has a specific shape according to the type of secondary cell 12. Therefore, if the user attempts to connect to the connector of the adaptor 13 a power supply cable used in a portable device having a power source specification which does not meet the standard of the secondary cell 12 accommodated in the adaptor 13, the user fails to connect them with each other because the connector of the cable and the connector of the adaptor 13 have different shapes from each other. Hence, there is no risk of the electric power having improper voltage and current being supplied from the power supply apparatus 10 to the portable device, thereby improving safety.

In the present embodiment, the power supply apparatus 10 can be freely carried by the user by attaching the engaging members 16 and 16 to the user's belt or the camera strap, thereby improving usability when the power supply apparatus 10 is used outdoors or the like.

In the present embodiment, when an AC power supply is located nearby, electric power can be supplied from the AC power source to the portable device through the power supply apparatus 10. This eliminates the need to consume the fuel stored in the fuel cartridge 14, making it possible to save the fuel stored in the fuel cartridge 14.

Although the present embodiment has been discussed using a case where the adaptor 13 accommodates the single secondary cell 12, it may be configured so that the adaptor 13 accommodates a plurality of secondary batteries 12 and the charging circuit 33 charges these secondary batteries 12. With this configuration, the plurality of secondary batteries 12 are accommodated in the adaptor 13, and the charging circuit 33 charges these secondary batteries 12. Therefore, even if the amount of electric power needed in the portable device fluctuates more widely, the electric power can be supplied correspondingly.

In the present embodiment, the charging circuit 33 is configured to have the functions of charging the secondary cell 12 and supplying power to the portable device. Alternatively, it may be configured so that the electric power generated by the fuel cell 31 is supplied to a cell built into the portable device at a charging voltage and a charging current suitable for the cell built into the portable device through the power supply cable, and the charging circuit 33 further has a function of charging the built-in cell. With this configuration, the built-in cell is charged by the power supply apparatus 10, while the portable device is operating upon receiving the power supply from the power supply apparatus 10. Therefore, when the power supply apparatus 10 is removed from the portable device, the portable device can be used with the built-in cell fully charged, thereby improving usability.

Alternatively, the secondary cell 12 accommodated in the adaptor 13 may have the same configuration as the cell built into the portable device. With this configuration, when the power supply apparatus 10 is not used, the secondary cell 12 is removed from the power supply apparatus 10, and the removed secondary cell 12 can be used as a built-in cell of the portable device. When the built-in cell of the portable device is exhausted, the power supply apparatus 10 is used with the built-in cell accommodated as the secondary cell 12 into the power supply apparatus 10, thereby making it possible to charge the built-in cell while using the portable device. This improves usability. When the adaptor 13 accommodates a plurality of the secondary batteries 12, these secondary batteries 12 can be charged simultaneously, further improving usability. For example, a user, who has a plurality of portable devices such as cameras having different power supply specifications, is able to obtain the power supply apparatus 10 capable of coping with all the cameras by preparing a plurality of adaptors 13 corresponding to the types of built-in cells used in these cameras, and possessing a single charger main body 11.

### (Second Embodiment)

A power supply apparatus using a fuel cell according to a second embodiment of the invention will be described below. In the following description, the same or similar parts are identified by the same reference numerals as in Figs. 1 to 3.

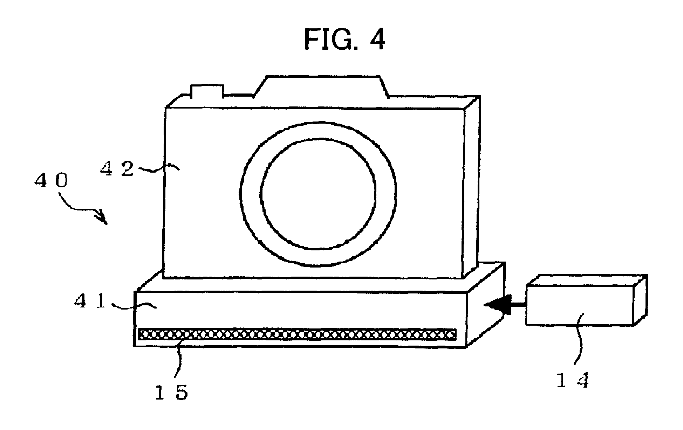

Fig. 4 is a perspective view showing schematically a configuration of a power supply apparatus 40 using a fuel cell 31 according to the second embodiment.

The power supply apparatus 40 is provided with a cradle type charger main body 41 having a rectangular parallelepiped shape, and a fuel cartridge 14 detachably accommodated in the side face of the charger main body 41. The charger main body 41 has an air inlet port 15 in a side face thereof, and also has a similar air inlet port in a bottom thereof. The power supply apparatus 40 is used integrally with a camera 42 by firmly fastening the charger main body 41 to the bottom of the camera 42 mounted on the upper surface of the charger main body 41 by a tripod screw.

The charger main body 41 includes therein a fuel cell 31, a DC/DC converter 32, a charging circuit 33, an AC/DC converter 34, a charging/cell output switching circuit 35, and a monitoring circuit 36, which are similar to those in the power supply apparatus 10 according to the first embodiment described above. In the second embodiment, the charger main body 41 directly and detachably accommodates a secondary cell 12, without using the adaptor 13 as in the first embodiment.

In the second embodiment, the charging circuit 33 performs charging by supplying the electric power generated by the fuel cell 31 to the secondary cell 12, at a charging voltage and a charging current suitable for the type of the secondary cell 12 accommodated in the charger main body 41. The charging/cell output switching circuit 35 and the monitoring circuit 36 are connected to a charger-side terminal for a cradle mounted on the upper surface of the charger main body 41. By mounting the camera 42 on the upper surface of the charger main body 41, the charger-side terminal is electrically connected to a camera-side terminal provided on the bottom of the camera 42. Through this connection, the monitoring circuit 36 can monitor the use situation of the camera 42. Depending on the result of monitoring performed by the monitoring circuit 36, the charging/cell output switching circuit 35 performs switching between the electric power generated by the fuel cell 31, and the electric power outputted by the secondary cell 12, and outputs either one of them to the camera 42 through the charger-side terminal and the camera-side terminal.

Also in the power supply apparatus 40 according to the second embodiment, owing to the output switching by the charging/cell output switching circuit 35, when the result of the monitoring by the monitoring circuit 36 is small fluctuations in the electric power needed in the camera 42, the electric power generated by the fuel cell 31 is supplied to the camera 42. On the other hand, when there are large fluctuations in the electric power needed in the camera 42, the electric power outputted by the secondary cell 12 is supplied to the camera 42. Therefore, the power supply apparatus 40 can also provide a proper power supply to the camera 42 even if the camera 42 rapidly requires a large amount of electric power. Further, with the above configuration, the camera 42 is integral with the charger main body 41. Therefore, the camera 42, integral with the charger main body 41, can be freely carried to use for a long period of time without concern related to power consumption.

Also in the second embodiment, when the AC/DC converter 34 is connected to the AC power source, the charging/cell output switching circuit 35 performs switching, depending on the result of monitoring by the monitoring circuit 36, between the electric power supplied from the AC power source through the AC/DC converter 34, and the electric power outputted from the secondary cell 12, and then outputs either one of them to the camera 42. Hence, also in the second embodiment, when an AC power supply is located nearby, electric power can be supplied from the AC power source to the portable device through the power supply apparatus 40. This eliminates the need to consume the fuel stored in the fuel cartridge 14, enabling economizing on the fuel stored in the fuel cartridge 14.

Alternatively, in the second embodiment, the charger main body 41 may be configured to accommodate a plurality of secondary batteries 12 so as to charge these secondary batteries 12. Also with this configuration, the charging circuit 33 charges these secondary batteries 12. Therefore, even if the amount of electric power needed in the camera 42 fluctuates more widely, the electric power can be supplied correspondingly.

Alternatively, the second embodiment may be configured so that the electric power generated by the fuel cell 31 is supplied to a cell built into the camera 42 through the charger-side terminal and the camera-side terminal at a charging voltage and a charging current suitable for the cell built into the camera 42, and the charging circuit 33 charges the built-in cell. With this configuration, the built-in cell is charged by the power supply apparatus 40, while the camera 42 is operating upon receiving the power supply from the power supply apparatus 40. Therefore, when the power supply apparatus 40 is removed from the camera 42, the camera 42 can be used with the built-in cell fully charged, thereby improving usability.

Alternatively, the secondary cell 12 accommodated in the charger main body 41 may have the same configuration as the cell built into the camera 42. With this configuration, when the power supply apparatus 40 is not used, the secondary cell 12 is removed from the power supply apparatus 40, and the removed secondary cell 12 can be used as a built-in cell of the camera 42. When the built-in cell of the camera 42 is exhausted, the power supply apparatus 40 is used, with the built-in cell accommodated as the secondary cell 12 in the power supply apparatus 40, making it possible to charge the built-in cell while using the camera 42. This improves usability. When the charger main body 41 accommodates a plurality of the secondary batteries 12, these secondary batteries 12 can be charged simultaneously, further improving usability.

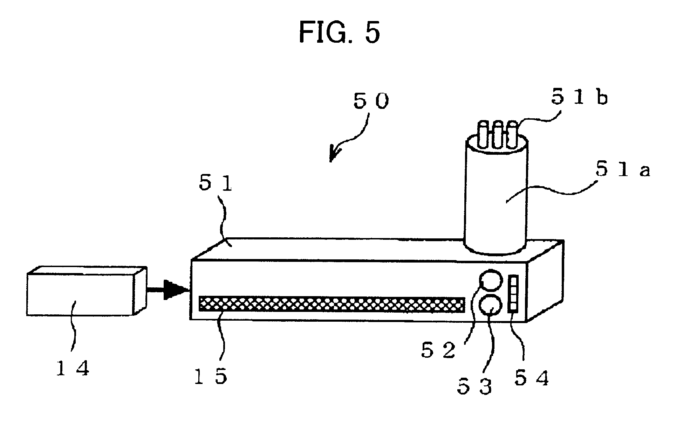

The second embodiment has been discussed using a case where the charger main body 41 of the power supply apparatus 40 is of the cradle type. Alternatively, as with a power supply apparatus 50 using a fuel cell 31 shown in Fig. 5, a charger main body 51 may be formed in a cell pack shape, and the charger main body 51 may detachably accommodate the secondary cell 12 and the fuel cartridge 14.

The charger main body 51 has the same internal structure as the charger main body 41 of the power supply apparatus 40 according to the second embodiment, and includes therein a fuel cell 31, a DC/DC converter 32, a charging circuit 33, an AC/DC converter 34, a charging/cell output switching circuit 35 and a monitoring circuit 36. The charger main body 51 has an air inlet port 15 in a side face thereof, and also has a similar air inlet port in a bottom thereof.

A cylindrically projected charger-side terminal 51a is provided at the right end on an upper surface of the charger main body 51. A connector pin 51b projects from the tip of the charger-side terminal 51a. By inserting the charger-side terminal 51a into a cell chamber of the camera 42, the connector pin 51b is electrically connected to the camera-side terminal provided within the cell chamber. Through this connection, the monitoring circuit 36 can monitor the usage state of the camera 42. Depending on the result of monitoring performed by a monitoring circuit 36, the charging/cell output switching circuit 35 performs switching between the electric power generated by the fuel cell 31, and the electric power outputted by the secondary cell 12, and outputs either one of them to the camera 42 through the connector pin 51b of the charger-side terminal 51a and the camera-side terminal.

The power supply apparatus 50 is used with the charger main body 51 gripped by being integrated with the camera 42, by inserting the charger-side terminal 51a into the cell chamber of the camera 42 and firmly fastening the charger main body 51 to the bottom of a camera 42 by a tripod screw. The side face of the charger main body 51 is provided with a shutter button 52, a focus/exposure lock button 53, a command dial 54 and the like. These improve the operability during vertical-position shooting when the power supply apparatus 50 is used, being integrated with the camera 42.

The power supply apparatus 50 thus configured also produces the same effects as in the power supply apparatus 40 according to the second embodiment.

The abovementioned power supply apparatuses 10, 40 and 50 of the respective embodiments are also applicable to portable devices such as portable telephones, video cameras, PDAs (personal digital assistants), in addition to cameras. These cases also produce the same effects as in the foregoing embodiments.

## Claims

1. A power supply apparatus (10) using a fuel cell (31), comprising:
an adaptor (13) provided with an identification mechanism to identify the type of a secondary cell (12) accommodated therein, the adaptor (13) detachably accommodating the secondary cell (12) and having a certain external shape irrespective of the type of the secondary cell (12) accommodated; and
a charger main body (11) provided with a fuel cell (31) to generate electric power by using fuel supplied from a fuel containing tank (14), a charging circuit (33) to perform charging by supplying electric power generated by the fuel cell (31) to the secondary cell (12) accommodated in the adaptor (13), at a charging voltage and a charging current suitable for a type of the secondary cell (12) identified by the identification mechanism, a monitoring circuit (36) to monitor usage state of a portable device, and an output switching circuit (35) that performs switching, depending on a result of monitoring performed by the monitoring circuit (36), between electric power generated by the fuel cell (31) and electric power outputted by the secondary cell (12) accommodated in the adaptor (13), and outputs either one of them to the portable device, wherein the charger main body (11) detachably accommodates the adaptor (13) and the fuel containing tank (14).

2. The power supply apparatus (10) using a fuel cell (31), according to claim 1, wherein the adaptor (13) accommodates a plurality of secondary batteries (12), and the charging circuit (35) charges the plurality of secondary batteries (12).

3. The power supply apparatus (10) using a fuel cell (31), according to claim 1 or 2, wherein the adaptor (13) has a connector which outputs electric power switched by the output switching circuit (35), and has a specific shape according to the type of the secondary cell (12) accommodated.

4. The power supply apparatus (10) using a fuel cell (31), according to any one of claims 1 to 3, wherein the charger main body (11) is provided with an engaging member (16) detachably engaged to a belt or a camera strap.

5. The power supply apparatus (10) using a fuel cell (31), according to any one of claims 1 to 4, wherein the charging circuit (33) performs charging by supplying electric power generated by the fuel cell (31) to a cell built into the portable device, at a charging voltage and a charging current suitable for the cell built into the portable device.

6. The power supply apparatus (10) using a fuel cell (31), according to any one of claims 1 to 5, wherein the secondary cell (12) is of the same type as a cell built into the portable device.

7. The power supply apparatus (10) using a fuel cell (31), according to any one of claims 1 to 6, wherein the charging circuit (33) performs charging by supplying the secondary cell (12) with electric power supplied from an AC power source, instead of the electric power generated by the fuel cell (31), and the output switching circuit (35) performs switching, depending on a result of monitoring performed by the monitoring circuit (36), between electric power supplied from the AC power source and electric power outputted by the secondary cell (12), and outputs either one of them to the portable device.

## Patentansprüche

1. Eine Brennstoffzelle (31) verwendende Stromversorgungsvorrichtung (10), umfassend:
einen Adapter (13), der mit einem Identifikationsmechanismus versehen ist, um den Typ einer darin aufgenommenen Sekundärzelle (12) zu identifizieren, worin der Adapter (13) die Sekundärzelle (12) abnehmbar aufnimmt und eine bestimmte Außenform hat, unabhängig vom Typ der darin aufgenommenen Sekundärzelle (12); und
einen Laderhauptkörper (11), versehen mit einer Brennstoffzelle (31), um durch Verwendung von Brennstoff, der von einem Brennstoff enthaltenden Tank (14) zugeführt wird, elektrische Energie zu erzeugen, einer Ladeschaltung (33) zur Durchführung eines Ladevorgangs durch Zufuhr von mit der Brennstoffzelle (31) erzeugter elektrischer Energie zu der im Adapter (13) aufgenommenen Sekundärzelle (12) mit einer Ladespannung und einem Ladestrom, die für einen vom Identifikationsmechanismus identifizierten Typ der Sekundärzelle (12) geeignet sind, einer Überwachungsschaltung (36) zum Überwachen des Gebrauchszustands einer tragbaren Vorrichtung, und einer Ausgangsumschalt-Schaltung (35), die in Abhängigkeit von einem Ergebnis der von der Überwachungsschaltung (36) durchgeführten Überwachung ein Umschalten zwischen der von der Brennstoffzelle (31) erzeugten elektrischen Energie und der von der im Adapter (13) aufgenommenen Sekundärzelle (12) ausgegebenen elektrischen Energie durchführt, und eine von diesen an die tragbare Vorrichtung ausgibt, worin der Laderhauptkörper (11) den Adapter (13) und den Brennstoff enthaltenden Tank (14) abnehmbar aufnimmt.

2. Die eine Brennstoffzelle (31) verwendende Stromversorgungsvorrichtung (10) nach Anspruch 1, worin der Adapter (13) eine Mehrzahl von Sekundärbatterien (12) aufnimmt und die Ladeschaltung (35) die Mehrzahl von Sekundärbatterien (12) lädt.

3. Die eine Brennstoffzelle (31) verwendende Stromversorgungsvorrichtung (10) nach Anspruch 1 oder 2, worin der Adapter (13) einen Stecker aufweist, der von der Ausgangsumschalt-Schaltung (35) geschaltete elektrische Energie ausgibt und eine spezifische Form hat, gemäß dem Typ der aufgenommenen Sekundärzelle (12).

4. Die eine Brennstoffzelle (31) verwendende Stromversorgungsvorrichtung (10) nach einem der Ansprüche 1 bis 3, worin der Laderhauptkörper (11) mit einem Eingriffselement (16) versehen ist, das mit einem Riemen oder einem Kameragurt lösbar in Eingriff steht.

5. Die eine Brennstoffzelle (31) verwendende Stromversorgungsvorrichtung (10) nach einem der Ansprüche 1 bis 4, worin die Ladeschaltung (33) das Laden durchführt, indem sie von der Brennstoffzelle (31) erzeugte elektrische Energie einer in die tragbare Vorrichtung eingebauten Zelle mit einer Ladespannung und einem Ladestrom, die für die in die tragbare Vorrichtung eingebaute Zelle geeignet sind, zuführt.

6. Die eine Brennstoffzelle (31) verwendende Stromversorgungsvorrichtung (10) nach einem der Ansprüche 1 bis 5, worin die Sekundärzelle (12) vom gleichen Typ wie eine in die tragbare Vorrichtung eingebaute Zelle ist.

7. Die eine Brennstoffzelle (31) verwendende Stromversorgungsvorrichtung (10) nach einem der Ansprüche 1 bis 6, worin die Ladeschaltung (33) das Laden durchführt, indem sie der Sekundärzelle (12), anstatt der von der Brennstoffzelle (31) erzeugten elektrischen Energie, von einer Wechselstromquelle zugeführte elektrische Energie zuführt, und die Ausgangsumschalt-Schaltung (35) das Umschalten in Abhängigkeit von einem Ergebnis der von der Überwachungsschaltung (36) durchgeführten Überwachung zwischen der von der Wechselstromquelle zugeführten elektrischen Energie und der von der Sekundärzelle (12) ausgegebenen Energie durchführt und eine von diesen an die tragbare Vorrichtung ausgibt.

## Revendications

1. Appareil d'alimentation électrique (10) utilisant une pile à combustible (31), comprenant :
un adaptateur (13) pourvu d'un mécanisme d'identification pour identifier le type d'une pile secondaire (12) logée dans celui-ci, l'adaptateur (13) contenant de façon détachable la pile secondaire (12) et ayant une certaine forme externe indépendant du type de la pile secondaire (12) contenue ; et
un corps principal de chargeur (11) pourvu d'une pile à combustible (31) pour générer l'alimentation électrique en utilisant un combustible fourni à partir d'un réservoir contenant du combustible (14), un circuit de chargement (33) pour réaliser le chargement par la fourniture d'alimentation électrique générée par la pile à combustible (31) à la pile secondaire (12) contenue dans l'adaptateur (13), à une tension de charge et un courant de charge adapté pour un type de la pile secondaire (12) identifiée par le mécanisme d'identification, un circuit de surveillance (36) pour surveiller l'état d'usage d'un dispositif portable, et un circuit de commutation de sortie (35) qui réalise la commutation, en fonction d'un résultat de surveillance réalisé par le circuit de surveillance (36), entre l'alimentation électrique générée par la pile à combustible (31) et l'alimentation électrique fournie par la pile secondaire (12) contenue dans l'adaptateur (13), et fournit à l'un ou l'autre d'eux au dispositif portable, dans lequel le corps principal de chargeur (11) contient de façon détachable l'adaptateur (13) et le réservoir contenant du combustible (14).

2. Appareil d'alimentation électrique (10) contenant une pile à combustible (31), selon la revendication 1, dans lequel l'adaptateur (13) contient une pluralité de batteries secondaires (12), et le circuit de charge (35) charge la pluralité de batteries secondaires (12).

3. Appareil d'alimentation électrique (10) utilisant une pile à combustible (31), selon la revendication 1 ou 2, dans lequel l'adaptateur (13) a un connecteur qui fournit l'alimentation électrique commutée par le circuit de commutation de sortie (35), et a une forme spécifique selon le type de la pile secondaire (12) contenue.

4. Appareil d'alimentation électrique (10) utilisant une pile à combustible (31) selon l'une quelconque des revendications 1 à 3, dans lequel le corps principal de chargeur (11) est pourvu d'un élément de prise (16) en prise de façon détachable à une ceinture ou une courroie de caméra.

5. Appareil d'alimentation électrique (10) utilisant une pile à combustible (31), selon l'une quelconque des revendications 1 à 4, dans lequel le circuit de charge (33) réalise la charge en fournissant une alimentation électrique générée par la pile à combustible (31) à une pile construite dans le dispositif portable, à une tension de charge et un courant de charge appropriés pour la pile construite dans le dispositif portable.

6. Appareil d'alimentation électrique (10) utilisant une pile à combustible (31), selon l'une quelconque des revendications 1 à 5, dans lequel la pile secondaire (12) est un du même type qu'une pile construite dans le dispositif portable.

7. Appareil d'alimentation électrique (10) utilisant une pile à combustible (31), selon l'une quelconque des revendications 1 à 6, dans lequel le circuit de charge (33) réalise la charge en alimentant la pile secondaire (12) avec une alimentation électrique fournie à partir d'une source d'alimentation alternative, au lieu de l'alimentation électrique générée par la pile à combustible (31), et le circuit de commutation de sortie (35) réalise la commutation, en fonction d'un résultat de surveillance réalisé par le circuit de surveillance (36), entre l'alimentation électrique fournie par la source d'alimentation alternative et l'alimentation électrique fournie par une pile secondaire (12), et fournit l'un ou l'autre d'eux au dispositif portable.
